Europäisches Patentamt

European Patent Office

Office européen des brevets

(11) Veröffentlichungsnummer: **0 302 193**
**A1**

## (12) EUROPÄISCHE PATENTANMELDUNG

(21) Anmeldenummer: 88108559.1

(22) Anmeldetag: 28.05.88

(51) Int. Cl.⁴: **B62D 1/10 , B60K 35/00**

(30) Priorität: 07.08.87 DE 3726336

(43) Veröffentlichungstag der Anmeldung:
08.02.89 Patentblatt 89/06

(84) Benannte Vertragsstaaten:
**DE FR GB IT SE**

(71) Anmelder: **BAYERISCHE MOTOREN WERKE AG**
**Postfach 40 02 40 Petuelring 130 - AJ-31**
**D-8000 München 40(DE)**

(72) Erfinder: **Matschinsky, Wolfgang**
**Georgenschwaigstrasse 18**
**D-8000 München 40(DE)**
Erfinder: **Riedl, Helmut**
**Heufelderstrasse 4**
**D-8000 München 80(DE)**

(54) **Lenkrad.**

(57) Ein Lenkrad (1) mit damit drehfest verbundener Prallplatte (3) weist einen Bildschirm (4) in der Prallplatte (3) auf, in welchem Anzeige- und/oder Betätigungssymbole 6,7,8 elektrisch so erzeugt werden, daß die genannten Symbole bei einer Lenkraddrehung in fahrzeugfester Position stehenbleiben.

Fig.2

## Lenkrad

Die Erfindung betrifft ein Lenkrad gemäß dem Oberbegriff des Anspruchs 1.

Bei einem bekannten Lenkrad dieser Art ist die Prallplatte fahrzeugfest angeordnet, so daß bei einer Drehung des Lenkradkranzes die Anzeige- und/oder Betätigungselemente stehen bleiben Hierzu ist die Prallplatte auf den Lenkrad drehbar gelagert und über ein Zahnradgetriebe mit der fahrzeugfesten Lenksäulenlagerung so geführt, daß die Prallplatte bei Lenkraddrehung stehen bleibt.

Eine derartige Konstruktion ist mit hohem technischen Aufwand verbunden. Außerdem besteht die Gefahr der Beschädigung, wenn sich der Fahrer beim Einsteigen auf dem Lenkrad abstützt. Will man Spielfreiheit durch Aufbringen einer Vorspannung in der Verzahnung bzw. der Lagerung erreichen, so sind erhöhte Reibungsverluste die Folge, welche zu einem Reibmoment zwischen Prallplatte und Lenkradkranz und damit zu einer Lenkungsrückstellung führen können. Bei einem Defekt der Verzahnung besteht die Gefahr des Blockierens der Lenkung.

Es ist Aufgabe der Erfindung, ein Lenkrad mit Prallplatte der im Oberbegriff des Anspruchs 1 beschriebenen Art einfacher und unter Vermeidung eines mechanischen Getriebes zwischen Prallplatte und Lenkrad so auszubilden, daß nach wie vor eine bequeme Ablesung und Betätigung der in der Prallplatte untergebrachten Elemente möglich ist.

Zur Lösung dieser Aufgabe sind die kennzeichnenden Merkmale des Anspruchs 1 vorgesehen.

Vorteilhafte Weiterbildungen der Erfindung sind in den Unteransprüchen angegeben.

Bei der Erfindung sind Lenkrad und Prallplatte drehfest miteinander verbunden. Die Prallplatte dreht also bei einer Lenkraddrehung mit. Aufgrund der erfindungsgemäßen elektrischen Erzeugung der Anzeige- und/oder Betätigungssymbole auf dem in der Prallplatte integrierten Bildschirm wird ein mechanisches Getriebe zwischen Lenkrad und Prallplatte vermieden und eine bequeme Ablesung und Betätigung gleichwohl gewährleistet, weil man gemäß der Erfindung in einfacher Weise die elektrisch erzeugten Symbole auf dem mit dem Lenkrad mitdrehenden Bildschirm so wandern lassen kann, daß sie für den Fahrer scheinbar in fahrzeugfester Position verbleiben, d.h. stillstehen bleiben.

Die Gefahr von Lenkungsreibung bzw. -blockierung ist ausgeschlossen Ferner ist es möglich, die Anzeige- und Betätigungssymbole nach Zahl und Anordnung zu variieren. Soll beispielsweise in der Prallplatte ein Airbag untergebracht werden, kann der Bildschirm ringförmig um eine Aussparung zur Unterbringung des Airbags herum angeordnet sein.

Die Erfindung ist im folgenden anhand schematischer Zeichnungen an einem Ausführungsbeispiel mit weiteren Einzelheiten näher erläutert. Es zeigen:

Fig. 1 einen Schnitt durch ein Lenkrad mit Prallplatte und ein lenkradseitiges Lenksäulenlager gemäß der Erfindung;

Fig. 2 eine Draufsicht auf das Lenkrad nach der Erfindung bei Geradeausfahrt und

Fig. 3 eine Draufsicht auf das Lenkrad nach der Erfindung in eingeschlagenem Zustand der Lenkung.

Das in den Figuren gezeigte Lenkrad eines Kraftfahrzeuges weist einen Lenkradkranz 1 auf, mit dem über vier Speichen 2 eine insgesamt mit der Bezugszahl 3 versehene Prallplatte drehfest verbunden ist. In die Prallplatte ist ein Bildschirm 4 eingelassen. Der Bildschirm ist als Tast-Bildschirm ausgestaltet, so daß hinter ihm befindliche Sensoren 5 durch Fingerdruck auf den Bildschirm an der entsprechenden Stelle über dem betreffenden Sensor 5 aktiviert werden können. An dieser Bildschirmstelle wird elektrisch ein entsprechendes Betätigungssymbol 6 abgebildet.

Ferner sind auf dem Bildschirm Anzeigesymbole 7,8 abgebildet.

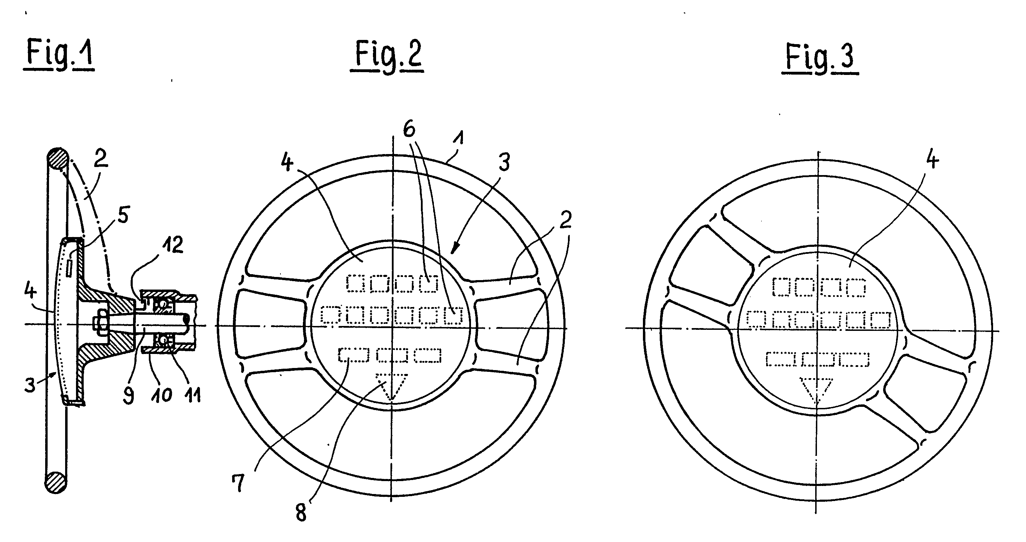

Zwischen der drehfest mit der Lenkspindel 9 verbundenen Prallplatte 3 und dem Gehäuse 10 der Lenksäulenlagerung 11 ist ein berührungsfreier Drehübertrager 12 zur Übertragung elektromagnetischer Steuersignale angeordnet. Wird der Lenkradkranz 1 gemäß Fig. 3 verdreht, so werden die Anzeige- bzw. Betätigungssymbole so angesteuert, daß sie auf dem Bildschirm 4 derart wandern, daß sie aus der Sicht des Fahrers immer in fahrzeugfester Position verbleiben.

Die Drehübertragung zwischen dem Gehäuse 10 der Lenksäulenlagerung 11 und der Prallplatte 3 kann anstatt berührungsfrei auch über Schleifringe erfolgen; jedoch ist eine berührungsfreie Lösung wegen der dann ausgeschalteten Abnutzung bevorzugt.

### Ansprüche

1. Lenkrad für ein Kraftfahrzeug mit Prallplatte, in der Anzeige- und/oder Betätigungselemente untergebracht sind, dadurch gekennzeichnet, daß ein Bildschirm (4) in die mit dem Lenkrad (1) drehfest verbundene Prallplatte (3) eingesetzt ist, und daß die Anzeige- und/oder Betätigungselemente (6,7,8) auf dem Bildschirm (4) als Symbole elektrisch derart erzeugt werden, daß die Symbole bei einer Lenkraddrehung nicht mitdrehen sondern in fahrzeugfester Position verbleiben.

2. Lenkrad nach Anspruch 1, dadurch gekennzeichnet, daß der Bildschirm (4) als Tast-Bildschirm ausgestaltet ist, daß unter dem Tast-Bildschirm mehrere Sensoren (5) mit dem Lenkrad (1) drehfest und in Drehrichtung benachbart angeordnet sind, daß die Sensoren so angesteuert werden, daß ihre Betätigungsfunktionen jeweils in Abhängigkeit von der Lenkraddrehung an die benachbarten Sensoren weitergegeben werden, und daß über den jeweils angesteuerten Sensoren entsprechende Betätigungssymbole auf dem Bildschirm (4) angezeigt werden.

3. Lenkrad nach Anspruch 1 oder 2, dadurch gekennzeichnet, daß der Bildschirm als Ring ausgebildet und in der Ringmitte ein Airbag untergebracht ist.

4. Lenkrad nach einem der Ansprüche 1 bis 3, dadurch gekennzeichnet, daß ein Drehübertrager (12) zwischen Prallplatte (3) und fahrzeugfestem Lenksäulenlagergehäuse (10) zur elektrischen Signalübertragung vorgesehen ist.

5. Lenkrad nach Anspruch 4, dadurch gekennzeichnet, daß der Drehübertrager berührungsfrei zur Übertragung insbesondere elektromagnetischer Signale ausgebildet ist.

Fig.1

Fig.2

Fig.3

2

5

12

4

3

9  10  11

6  1

4  3

2

7

8

4

EP 0 302 193 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN Band 7, Nr. 1 (M-183) (1146), 6. Januar 1983; & JP - A -57 160 763 (TOYOTA) 04.10.1982 --- | 1-3 | B 62 D 1/10 B 60 K 35/00 |
| A | DE-C- 834 651 (PORSCHE KONSTRUKTIONEN) * Anspruch 1; Figur 1 * --- | 1,3 | |
| A | EP-A-0 119 350 (SHELLER-GLOBE) * Zusammenfassung; Ansprüche 1,2 * --- | 1,4,5 | |
| A | EP-A-0 047 498 (NISSAN) * Ansprüche 1,3; Figur 3 * ----- | 1,4 | |

RECHERCHIERTE SACHGEBIETE (Int. Cl.4)

B 62 D 1/00
B 60 K 35/00
B 60 K 37/00
B 60 R 16/00

Der vorliegende Recherchenbericht wurde für alle Patentansprüche erstellt

| Recherchenort | Abschlußdatum der Recherche | Prüfer |
|---|---|---|
| BERLIN | 21-10-1988 | KRIEGER P O |

EPO FORM 1503 03.82 (P0403)